(19) Europäisches Patentamt

European Patent Office

Office européen des brevets

(11) Veröffentlichungsnummer: **0 317 654 B1**

(12) **EUROPÄISCHE PATENTSCHRIFT**

(45) Veröffentlichungstag der Patentschrift: **29.07.92**

(21) Anmeldenummer: **87117254.0**

(22) Anmeldetag: **24.11.87**

(51) Int. Cl.⁵: **H04J 7/00**, G06F 7/52

(54) **Demultiplexschaltung für ein Multiplexsignal.**

(43) Veröffentlichungstag der Anmeldung:
**31.05.89 Patentblatt 89/22**

(45) Bekanntmachung des Hinweises auf die
Patenterteilung:
**29.07.92 Patentblatt 92/31**

(84) Benannte Vertragsstaaten:
**DE FR NL**

(56) Entgegenhaltungen:
DE-A- 2 330 263
US-A- 4 381 550

**RADIO FERNSEHEN ELEKTRONIK, Band 29,
Nr. 3, 1980, Seiten 150-154, Berlin, DE; I.
KRAHL et al.: "Schnelles I2L-Multiplizier- und
Dividierfeld"**

(73) Patentinhaber: **Deutsche ITT Industries GmbH
Hans-Bunte-Strasse 19 Postfach 840
W-7800 Freiburg i.Br.(DE)**

(72) Erfinder: **Gillies, David
Waldstrasse 29
W-7803 Gundelfingen(DE)**

**Beschreibung**

Die Erfindung betrifft eine Demultiplexschaltung für ein im Takt eines Taktsignals auftretendes Multiplexsignal, das aus einem ersten und einem zweiten, im natürlichen Dualcode vorliegenden und derart redundanten Digitalsignal, daß sie ein jeweiliges Analogsignal anstatt durch $2^p$ maximal mögliche nur durch n Amplitudenniveaus repräsentieren, wobei p die jeweilige Stellenzahl der Digitalsignale ist und für n gilt: 2ld n kleiner oder gleich 2p-1, nach der Formel m = ns1 + s2 gebildet ist, vergleiche den Oberbegriff des Patentanspruchs.

Das darin enthaltende Bildungsgesetz für das Multiplexsignal aus den beiden Digitalsignalen ist in dem von G. Drechsler zusammengestellten Tagungsband, Teil 2 über die 12. Jahrestagung der FKTG ( = Fernseh- und Kinotechnische Gesellschaft) in Mainz vom 2. bis 6. Juni 1986 auf den Seiten 706 bis 716, insbesondere Seite 714 erläutert. Durch die beschriebene Bildung des Multiplexsignals kann gegenüber der einfachen Aneinanderreihung der Stellen der beiden Digitalsignale eine Stelle im Multiplexsignal eingespart werden. Wenn also z.B. die Digitalsignale jeweils fünfstellig sind, mit ihnen Jedoch nur n = 22 Amplitudenniveaus wiedergegeben werden, so hat das Multiplexsignal anstatt 10 nur 9 Stellen. Soll dieses Multiplexsignal abgespeichert werden, so ist gegenüber einem zehnstelligen Multiplexsignal der Speicherbedarf geringer.

Das Multiplexsignal läßt sich aufgrund des Bildungsgesetzes durch einen Konstanten-Multiplizierer und einen nachfolgenden Addierer aus den beiden Digitalsignalen erzeugen. Wie auf Seite 715 des genannten Buches angegeben ist, erfolgt das Demultiplexen nach dem entsprechend reziproken Gesetz m/n = s1 + s2/n, was mittels eines Dividierers, eines Multiplizierers für das Reziproken von n und eines Addierers realisiert werden kann. Da dieser Multiplizierer jedoch aus Genauigkeitsgründen wesentlich mehr Stellen haben muß - im obigen Zanlenbeispiel sind z.B. 16 erforderlich -, ist eine so erhebliche Kristallfläche einer monolithisch integrierten Schaltung erforderlich, daß dadurch der oben erwähnte Speicherplatzgewinn wieder aufgehoben wird.

Die Aufgabe der im Patentanspruch gekennzeichneten Erfindung besteht daher darin, eine Demultiplexschaltung für die eingangs geschilderten Multiplexsignale anzugeben, bei deren Realisierung als monolithisch integrierte Schaltung weniger Kristallfläche als beim erwähnten Multiplizierer etc. benötigt wird.

Da bei der Erfindung die p vorgesehenen Addierer nur (p + 1)-stellig sind, ist deren Flächenbedarf im wesentlichen gleich dem eines (p + 2)-stelligen Addierers, was schon erheblich weniger ist als beim erwähnten Multiplizierer. Von den 2p-1 Verzögerern sind p (p + 1)-stellig, ein weiterer p-stellig und von den restlichen p-3 Verzögerern ist der erste (p-2)-stellig, während jeder weiterer jeweils eine Stelle weniger als der vorausgehende aufweist. Dies führt ebenfalls zu einer Flächenersparnis der integrierten Schaltung, wozu auch die p-1 nur (p + 1)-stelligen sowie der p-stellige Umschalter beitragen. Auch die p Inverter und die p p-stufigen Schieberegister sind so kleinflächig, daß die Gesamtfläche der Demultiplexschaltung der Erfindung gegenüber dem erwähnten Multiplizierer etc. in einem Ausmaß kleiner ist, daß ihr der Vorzug zu geben ist. Zum Beispiel beträgt die Flächenersparnis bei Realisierung als CMOS-Schaltung zwischen 25% und 50%.

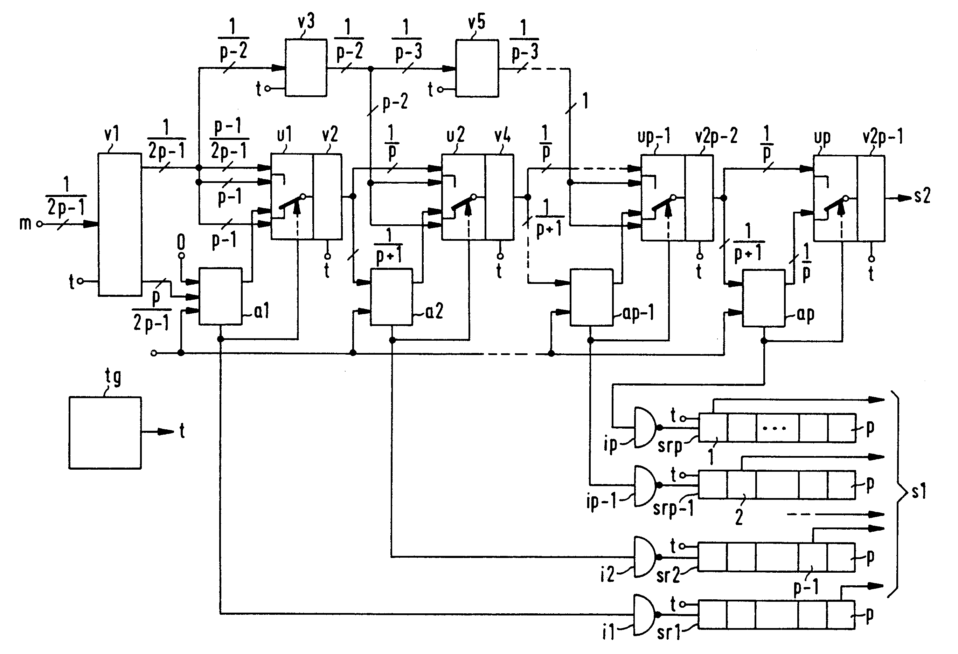

Die Erfindung wird nun anhand des in der Figur der Zeichnung dargestellten schematischen Schaltbilds eines Ausführungsbeispiels naher erläutert.

In der Figur sind zur Verdeutlichung, welche und wieviele Stellen eines Signals über entsprechende Verbindungsleitungen geführt sind, diese mit einem Schrägstrich (zum Zeichen, daß es sich allgemein um eine Mehrfachverbindung handelt) versehen. Der Zähler des daran stehenden Bruches gibt bei mehr als einer Leitung die niederste und dessen Nenner die höchste Stelle des über die Leitung geführten Signals an und damit auch die Anzahl der Stellen des Signals; bei einer einzigen Leitung steht neben dem Schrägstrich die Nummer der entsprechenden Stelle.

Das Multiplexsignal m, das, wie bereits oben erwähnt wurde, aufgrund seines Bildungsgesetzes 2p-1 Stellen hat, ist dem ersten Verzögerer v1 zugeführt, der demzufolge ebenfalls (2p-1)-stellig ist. Den p niedersten Stellen des ersten Eingangs des ersten Addierers a1 sind die p höchsten Stellen des Ausgangssignals des ersten Verzögerers v1 und der (p + 1)ten, höchsten Stelle dieses ersten Eingangs ist eine Null zugeführt, d.h. also die Stellen mit den Wertigkeiten $2^{2p-2}$ bis $2^{p-1}$; im obigen Beispiel mit p = 5, also neunstelligem Multiplexsignal m, sind dies also die neunte bis fünfte Stelle mit den Wertigkeiten $2^8$ bis $2^4$.

Die p + 1 höchsten Stellen des Ausgangssignals des Verzögerers v1 sind dem ersten Eingang des ersten Umschalters ul zugeführt, d.h. die Stellen mit den Wertigkeiten $2^{2p-2}$ bis $2^{p-2}$; mit p = 5 sind dies also die neunte bis vierte Stelle mit den Wertigkeiten $2^8$ bis $2^3$.

Der Summenausgang des Addierers al liegt ohne die Vorzeichenstelle an den p höchsten Stellen des zweiten Eingangs des Umschalters u1, dessen Steuereingang mit dem Übertragausgang des Addierers a1 verbunden ist. Die niederste Stelle des ersten Eingangs ist mit der des zweiten Eingangs des ersten Umschalters u1 verbunden; mit p = 5 liegt an diesen beiden Stellen also die vierte Stelle des Ausgangssignals des ersten Verzögerers v1 und somit auch des Multiplexsignals m; diese Stelle hat die Wertigkeit $2^3$. Die Schaltlage des Umschalters u1 wie auch die der weiteren noch zu beschreibenden Umschalter ist in der Figur für den Fall gezeigt, daß am Übertragausgang des Addierers a1 bzw. der weiteren noch zu beschreibenden Addierer eine Null, also bei positiver Logik der dem negativeren der beiden Binärpegel H, L entsprechende L-Pegel, auftritt. Am Ausgang des Umschalter u1 liegt der zweite Verzögerer v2.

Die p-2 niedersten Stellen des Ausgangssignals des Verzögerers v1 sind dem dritten Verzögerer v3 zugeführt. Bei diesen Stellen handelt es sich um die mit den Wertigkeiten $2^{p-3}$ bis $2^0$; somit ist der Verzögerer v3 (p-2)-stellig.

Wie ein Blick auf die Figur der Zeichnung zeigt, enthält die Demultiplexschaltung nach der Erfindung eine iterative Anordnung, wovon bisher eine "Zelle" und deren "Vorstufe" beschrieben wurde. Die "Zelle" besteht aus dem Addierer a1, dem Umschalter u1 dem Verzögerer v2 und dem Verzögerer v3, während die "Vorstufe" der Verzögerer v1 ist. Die eigentliche iterative Anordnung besteht aus den p-1 Zellen z1, z2... zp-1.

Auf die Zelle z1 folgt die Zelle z2 mit dem zweiten Addierer a2, dem zweiten Umschalter u2 sowie dem vierten und dem fünften Verzögerer v4, v5. Vom Ausgang des Verzögerers v2 sind alle Stellen mit dem ersten Eingang des Addierers a2 und die p niedersten Stellen mit den p höchsten des ersten Eingangs des zweiten Umschalters u2 verbunden. Vom Summenausgang des Addierers a2 liegen alle Stellen ohne die Vorzeichenstelle an den p höchsten Stellen des zweiten Eingangs des Umschalters u2, dessen Steuereingang mit dem Übertragausgang des Addierers a2 verbunden ist. Die jeweils niederste Stelle der beiden Eingänge des Umschalters u2 liegt an der höchsten Stelle des Ausgangs des Verzögerers v3; dies ist somit die (p-2)te Stelle des Multiplexsignals m, mit p = 5 also dessen dritte Stelle (Wertigkeit $2^2$). Am Eingang des Verzögerers v5 liegen dagegen die p-3 niedersten Stellen des Ausgangssignals des Verzögerers v3, also mit p = 5 die erste und die zweite Stelle. Somit ist der Verzögerer v5 nur noch (p-3)-stellig.

In der Zeichnung ist durch die gestrichelten Verbindungsleitungen angedeutet, daß aufgrund der beliebigen Anzahl der Zellen z... das anhand der Zellen z1, z2 gezeigte Schema entsprechend weiterzuführen ist, was dann zu der gezeigten letzten Zelle zp-1 führt. Diese besteht aus dem Addierer ap-1, dem Umschalter up-1 sowie dem Verzögerer v2p-2, da in dieser Zelle ein den Verzögerern v3, v5 entsprechender Verzögerer fehlt; der letzte dieser Verzögerer, der der (2p-3)te Verzögerer ist, liegt in der nichtgezeigten, der Zelle zp-1 vorangehenden Zelle, die das Bezugszeichen zp-2 hätte.

Der erste Eingang des (p-1)ten Addierers ap-1 liegt am Ausgang des in der Zeichnung nicht gezeigten, vorausgehenden (2p-4)ten Verzögerers. Die p niedersten Stellen des Ausgangssignals dieses Verzögerers sind mit den p höchsten des ersten Eingangs des (p-1)ten Umschalters up-1 verbunden. Vom Summenausgang des Addierers ap-1 liegen alle Stellen ohne die Vorzeichenstelle an den p höchsten Stellen des zweiten Eingangs des Umschalters up-1, dessen Steuereingang mit dem Übertragausgang des Addierers ap-1 verbunden ist. Die jeweils niederste Stelle der beiden Eingänge des Umschalters up-1 liegt am Ausgang des oben erwähnten, in der Figur nichtgezeigten (2p-3)ten Verzögerers. Diese Stelle ist die niederste Stelle des Multiplexsignals m.

Der Zelle zp-1 ist in der iterativen Anordnung noch die "Schlußstufe" mit dem p-ten Addierer ap, dem p-ten Umschalter up und dem (2p-1)ten Verzögerer v2p-1, der der letzte ist und hinter dem Umschalter up liegt sowie an dessen Ausgang das zweite Digitalsignal s2 abzunehmen ist, nachgeschaltet.

Vom Ausgangssignal des Verzögerers v2p-2 sind alle Stellen dem ersten Eingang des Addierers ap und die Stellen ohne die Vorzeichenstelle den nun nur noch p Stellen des ersten Eingangs des Umschalters up zugeführt. Der Summenausgang des Addierers ap liegt am nun nur noch p-stelligen zweiten Eingang des Umschalters up, dessen Steuereingang am Übertragausgang des Addierers ap liegt.

Dem jeweils zweiten Eingang sämtlicher Addierer a1...ap ist das dem negativen Wert von n entsprechende Dualwort "-n" zugeführt. Somit können die Addierer, falls in einer konkreten Demultiplexschaltung n konstant ist, als Konstantenaddierer ausgeführt werden. Bevorzugt wird -n in Zweierkomplementdarstellung den Addierern zugeführt.

Die Verzögerungszeit der Verzögerer v... ist gleich der Periodendauer des Taktsignals t, das aus dem in der Zeichnung schematisch gezeigten Taktgenerator tg stammt, der, wie bei umfangreichen digitalen Systemen üblich, deren getaktete Teilschaltungen speist, taktet und/oder synchronisiert.

Das erste Digitalsignal s1 ist aus den Übertragsignalen der Addierer a1...ap gebildet. Hierzu ist jedes dieser Signale einem der p Inverter i1...ip zugeführt, deren Ausgang mit dem jeweiligen Eingang eines der p p-stufigen Schieberegister sr1...srp verbunden ist, deren Schiebesignal das Taktsignal t ist. Die einzelnen Stellen des ersten Digitalsignals s1 sind an jeweils einer Stufe der Schieberegister sr... abzunehmen, und zwar an der p-ten Stufe p des ersten Schieberegister sr1 die Stelle mit der Wertigkeit $2^{p-1}$, an der (p-1)ten Stufe des zweiten Schieberegisters sr2 die Stelle mit der Wertigkeit $2^{p-2}$, usw. und an der zweiten Stufe des

**EP 0 317 654 B1**

(p-1)ten Schieberegisters srp-1 die Stelle mit der Wertigkeit $2^1$ sowie an der ersten Stufe 1 des p-ten Schieberegisters srp die Stelle mit der Wertigkeit $2^0$.

Die Wirkungsweise der Erfindung wird nun anhand eines konkreten Zahlenbeispiels und konkreter Werte der Digitalsignale s1, s2 und des daraus resultierenden Wertes des Multiplexsignals m erläutert. Es wird vorausgesetzt, daß n = 22 und p = 5 ist, also zwei Analogsignale mittels jeweils (nur) 22 Amplitudenniveaus digitalisiert sind. Die beiden Digitalsignale sollen die Werte haben:

s1 = 01001 ( = dezimal 9)

s2 = 01101 ( = dezimal 13)

Dann gilt für das Multiplexsignal:

m = 011010011 ( = dezimal 211 = 22 x 9 + 13)

Durch Anwendung des reziproken Bildungsgesetzes

$$m/n = s1 + s2/n$$

ergibt sich fit dezimal 22 = dual 10110 für -n im Zweierkomplement:

-n = 101010 (die höchste Stelle, also mit der führenden Eins, ist die Vorzeichenstelle).

m/n = dezimal 211/22 = 9,590909...

Die links vor dem Komma stehende Zahl ist bereits s1. Der rechts vom Komma stehende Teil, also die Zahl dezimal 0,590909..., muß noch mit n multipliziert werden, um s2 zu erhalten:

s2 = 0,590909... x 22 = 12,99... = 13

Das gleiche Ergebnis ergibt sich auch bei "direkter" Division mit Angabe des Restes:

```
211:22 = 9
198
13


9 = s1        13 = s2
```

Auf dieser "direkten" Division beruht die Demultiplexschaltung der Erfindung und ihre Wirkungsweise, für deren einzelne Schritte folgendes gilt:

1. **Zelle z1:**

   0011010011 Fünfte bis neunte Stelle von m als Addend von a1, eine Null in der höchsten Stelle,

   <u>101010</u> Addition von -n in a1,

   110111 sechste Stelle = 1, über i1 invertiert ergibt fünfte Stelle = 0 von s1.

2. **Zelle z2:**

   011010 wegen Übertrag von a1 = 1 wählt u1 die höchsten 6 Stellen von m als Addend von a2,

   <u>101010</u> Addition von -n in a2,

   1000100 sechste Stelle = Übertrag = 0, über i2 invertiert ergibt vierte Stelle = 1 von s1.

3. **Zelle "z3"** (in der Figur nicht vorhanden):

   001000 wegen Übertrag von a2 = 0 wählt u2 als Addend von "a3" die fünf niedersten Stellen (ohne die Vorzeichenstelle) des Ausgangs von a2 mit der fünften Stelle von m als niederster Stelle,

   <u>101010</u> Addition von -n in "a3",

   110010 sechste Stelle = Übertrag = 1, über "i3" invertiert ergibt dritte Stelle = 0 von s1.

4. **Zelle "z4"** (= Zelle zp-1 in der Figur):

   010001 wegen Übertrag von "a3" = 1 wählt "u3" als Addend von "a4" die fünf niedersten Stellen ohne die Vorzeichenstelle des Ausgangs von u2 (das sind die fünf niedersten Stellen 01000 des aus dem Ausgangssignal von a2 (= 001000) und der dritten Stelle von m (= 0) gebildeten Signals 001000) mit der zweiten Stelle (= 1) von m als niederster Stelle,

   <u>101010</u> Addition von -n in "a4",

   111011 sechste Stelle = Übertrag = 1, über "i4" invertiert ergibt zweite Stelle = 0 von s1.

5. Schlußstufe:

```
100011      wegen Übertrag von "a4" = 1 wählt "u4" als
            Addend von "a5" (= ap)die fünf niedersten
            Stellen ohne die Vorzeichenstelle des Ausgangs
            von "u3" (das sind die fünf niedersten Stelle
            10001 des Addenden von "a4" (s.o. unter 4.)
            mit der ersten Stelle (= 1) von m als nieder-
            ster Stelle,
101010      Addition von -n in "a5",
1001101     sechste Stelle = Übertrag = O, über "i5"
            (= ip) invertiert ergibt erste Stelle  = 1 von
            s1.
            Für s1 ergibt sich also: 01001. Wegen Über-
            trag von "a5" = O wählt "u5" die fünf nie-
            dersten Stellen des Ausgangs von "a5" als
            Digitalsignal s2 = 01101.
```

Somit sind die zur Bildung des Beispielwertes von m vorausgesetzten Werte von s1, s2 wiedergewonnen.

Die erfindungsgemäße Demultiplexschaltung wird bevorzugt monolithisch integriert realisiert, wobei insbesondere die bekannte MOS-Technik herangezogen werden kann. Sie kann Teil einer größeren integrierten Schaltung sein, aber auch als selbständige integrierte Schaltung realisiert werden.

**Patentansprüche**

**1.** Demultiplexschaltung für ein im Takt eines Taktsignals (t) auftretendes Multiplexsignal (m), das aus einem ersten und einem zweiten, im natürlichen Dualcode vorliegenden und derart redundanten Digitalsignal (s1, s2), daß sie ein jeweiliges Analogsignal anstatt durch $2^p$ maximal mögliche nur durch n Amplitudenniveaus repräsentieren, wobei p die jeweilige Stellenzahl der Digitalsignale ist und für n gilt: 2ld n kleiner oder gleich 2p-1, nach der Formel m = ns1 + s2 gebildet ist, gekennzeichnet durch folgende Merkmale:
- das (2p-1)stellige Multiplexsignal (m) ist einem ersten Verzögerer (v1) zugeführt;
- den p niedersten Stellen des ersten Eingangs eines ersten Addierers (a1) sind die p höchsten Stellen des Ausgangssignals des ersten Verzögerers (v1) und der (p + 1)ten, höchsten Stelle dieses ersten Eingangs ist eine Null zugeführt,
- die p + 1 höchsten Stellen des Ausgangssignals des ersten Verzögerers (v1) sind dem ersten Eingang eines ersten Umschalters (u1) zugeführt, und der Summenausgang des ersten Addierers (a1) liegt an den p höchsten Stellen des zweiten Eingangs und die niederste Stelle des ersten Eingangs an der des zweiten Eingangs des ersten Umschalters (u1) und dessen Steuereingang am Übertragausgang des ersten Addierers (a1),
- dem ersten Umschalter (u1) ist ein zweiter Verzögerer (v2) nachgeschaltet,
- die p-2 niedersten Stellen des Ausgangssignals des ersten Verzögerers (v1) sind einem dritten Verzögerer (v3) zugeführt;
- der erste Eingang eines zweiten Addierers (a2) ist mit dem Ausgangs des zweiten Verzögerers (v2) verbunden.
- die p höchsten Stellen des Ausgangssignals des zweiten Verzögerers (v2) sind den p höchsten Stellen des ersten Eingangs eines zweiten Umschalters (u2) zugeführt, und der Summenausgang des zweiten Addierers (a2) liegt an den p höchsten Stellen des zweiten Eingangs des zweiten Umschalters (u2) und dessen Steuereingang am Übertragausgang des zweiten Addierers (a2), wobei die jeweils niederste Stelle der beiden Eingänge des zweiten Umschalters (u2) mit der höchsten Stelle des Ausgangs des dritten Verzögerers (v3) verbunden ist,
- dem zweiten Umschalter (u2) ist ein vierter Verzögerer (v4) nachgeschaltet,
- die p-3 niedersten Stellen des Ausgangssignals des dritten Verzögerers (v3) sind einem fünften Verzögerer (v5) zugeführt, und so weiter;
- der erste Eingang eines (p-1)ten Addierers (ap-1) ist mit dem Ausgangs eines (2p-4)ten Verzögerers verbunden,
- die p niedersten Stellen des Ausgangssignals des (2p-4)ten Verzögerers sind den p höchsten Stellen des ersten Eingangs eines (p-1)ten Umschalters (up-1) zugeführt, und der Summenausgang des (p-1)ten Addierers (ap-1) liegt an den p höchsten Stellen des zweiten Eingangs des (p-1)ten Umschalters (up-1) und dessen Steuereingang am Übertragausgang des (p-1)ten Addierers (ap-1), wobei die jeweils niederste Stelle der beiden Eingänge des (p-1)ten Umschalters (up-1) mit dem Ausgang eines (2p-3)ten Verzögerers verbunden sind;
- dem (p-1)ten Umschalter (up-1) ist ein (2p-2)ter Verzögerer (v2p-2) nachgeschaltet;
- der erste Eingang eines p-ten Addierers (ap) ist mit dem Ausgang des (2p-2)ten Verzögerers (v2p-2) verbunden,
- die p niedersten Stellen des Ausgangssignals des (2p-1)ten Verzögerers (v2p-1) sind dem ersten Eingang eines p-stelligen p-ten Umschalters (up) zugeführt, und der Summenausgang des p-ten Addierers (ap) liegt am zweiten Eingang des p-ten Umschalter (up) und dessen Steuereingang am Übertragausgang des p-ten Addierers (ap),
- dem p-ten Umschalter (up) ist ein (2p-1)ter Verzögerer (v2p-1) nachgeschaltet, dessen Ausgangssignal das zweite Digitalsignal (s2) ist;
- dem jeweils zweiten Eingang der p Addierer (a1...ap), die alle (p+1)-stellig sind, ist das dem negativen Wert von n entsprechende Dualwort ("-n") zugeführt, und der jeweilige Summenausgang liegt ohne die jeweilige Vorzeichenstelle am zweiten Eingang des jeweiligen Umschalters,
- die p-1 ersten Umschalter (u1...up-1) sind jeweils (p+1)-stellig;
- der jeweilige Übertragausgang der p Addierer (a1...ap) ist über jeweils einen von p Invertern (i1...ip) mit dem jeweiligen Serieneingang eines von p p-stufigen Schieberegistern (sr1...srp) verbunden, deren Schiebesignal das Taktsignal (t) ist, und
- die einzelnen Stellen des ersten Digitalsignals (s1) sind an jeweils einer Stufe des Schieberegisters (sr...) wie folgt abzunehmen:
  - an der p-ten Stufe (p) des ersten Schieberegisters (sr1) die Stelle mit der Wertigkeit $2^{p-1}$,
  - an der (p-1)ten Stufe des zweiten Schieberegisters (sr2) die Stelle mit der Wertigkeit $2^{p-2}$, usw., und
  - an der ersten Stufe (1) des p-ten Schieberegisters (srp) die Stelle mit der Wertigkeit $2^0$.

## Claims

1. Demultiplexing circuit for a multiplex signal (m) whose pulses occur at the pulse repetition rate of a clock signal (t), and which is formed from a first digital signal (s1) and a second digital signal (s2) which are present in the straight binary code and are so redundant as to each represent an analog signal by only n amplitude levels instead of $2^p$
maximum possible amplitude levels, where p is the respective number of bits in the digital signal, and n satisfies the relation: 2ld n less than or equal to 2p-1, according to the formula m = ns1+s2, characterized by the following features:
   - The (2p-1)-bit multiplex signal (m) is applied to a first delay element (v1);
   - the p least significant bits of the first input of a first adder (a1) are connected to the p most significant bits of the output of the first delay element (v1), and the (p+1)st most significant bit of this first input has a zero connected thereto;
   - the p+1 most significant bits of the output of the first delay element (v1) are fed to the first input of a first switch (u1), and the sum output of the first adder (a1) is connected to the p most significant bits of the second input, while the least significant bit of the first input is connected to that of the second input of the first switch (u1), whose control input is connected to the carry output of the first adder (a1);
   - the first switch (u1) is followed by a second delay element (v2);
   - the $p^{-2}$ least significant bits of the output of the first delay element (v1) are fed to a third delay element (v3);
   - the first input of a second adder (a2) is connected to the output of the second delay element (v2);
   - the p most significant bits of the output of the second delay element (v2) are connected to the p most significant bits of the first input of a second switch (u2), and the sum output of the second adder (a2) is connected to the p most significant bits of the second input of the second switch (u2), whose control input is connected to the carry output of the second adder (a2), with the least significant bit of each of the two inputs of the second switch (u2) connected to the most significant bit of the output of the third delay element (v3);

- the second switch (u2) is followed by a fourth delay element (v4);
- the $p^{-3}$ least significant bits of the output of the third delay element (v3) are fed to a fifth delay element (v5), and so on;
- the first input of a (p-1)st adder (ap-1) is connected to the output of a (2p-4)th delay element;
- the p least significant bits of the output of the (2p-4)th delay element are connected to the p most significant bits of the first input of a (p-1)st switch (up-1), and the sum output of the (p-1)th adder (ap-1) is connected to the p most significant bits of the second input of the (p-1)th switch (up-1), whose control input is connected to the carry output of the (p-1)st adder (ap-1), with the least significant bit of each of the two inputs of the (p-1)st switch (up-1) connected to the output of a (2p-3)rd delay element;
- the (p-1)st switch (up-1) is followed by a (2p-2)nd delay element (v2p-2);
- the first input of a pth adder (ap) is connected to the output of the (2p-2)nd delay element (v2p-2);
- the p least significant bits of the output of the (2p-1)st delay element (v2p-1) are fed to the first input of a p-bit pth switch (up), and the sum output of the pth adder (ap) is coupled to the second input of the pth switch (up), whose control input is connected to the carry output of the pth adder (ap);
- the pth switch (up) is followed by a (2p-1)st delay element (v2p-1), whose output is the second digital signal (s2);
- the second input of each of the p adders (a1...ap), which are all (p + 1)-bit adders, are fed with the binary word ("-n") corresponding to the negative value of n, and the sum outputs of these adders are applied to the second inputs of the associated switches without the respective sign bit;
- the P-1 first switches (u1...up-1) are (p + 1)-bit switches;
- the carry output of each of the p adders (a1...ap) is connected through one of p inverters (i1...ip) to the serial input of one of p p-stage shift registers (sr1...srp), whose shift signal is the clock signal (t), and
- the individual bits of the first digital signal (s1) can each be taken from one stage of the shift register (sr...) as follows:
  - the bit with the weight $2^{p-1}$ from the pth stage (p) of the first shift register (sr1),
  - the bit with the weight $2^{p-2}$ from the (p-1)st stage of the second shift register (sr2), etc., and
  - the bit with the weight $2^{0}$ from the first stage (1) of the pth shift register (srp).

**Revendications**

1. Circuit démultiplexeur pour un signal multiplex (m), qui apparaît à la cadence d'un signal de cadence (t) et est constitué par des premier et second signaux numériques (s1, s2), qui sont présents selon le code binaire naturel et sont redondants de telle sorte qu'ils représentent un signal analogique respectif non pas par $2^{p}$ niveaux d'amplitude maximum possibles, mais seulement par n niveaux d'amplitude, conformément à la formule m = ns1 + s2, p étant le nombre respectif de chiffres des signaux numériques, tandis que pour n on a : 21d n inférieur ou égal à 2p-1,
caractérisé par les caractéristiques suivantes :
   - le signal multiplex (m) à (2p-1) chiffres est envoyé à un premier circuit de retardement (v1) ;
   - les p positions les plus élevées du signal de sortie du premier circuit de retardement (v1) sont envoyées aux p positions les plus faibles de la première entrée d'un premier additionneur (a1), et un zéro est envoyé à la (p + 1)-ème position la plus élevée de cette première entrée ;
   - les p + 1 chiffres les plus élevés du signal de sortie du premier circuit de retardement (v1) sont envoyés à la première entrée d'un premier commutateur (u1), et la sortie somme du premier additionneur (a1) est raccordée aux p positions les plus élevées de la seconde entrée, et le chiffre le plus faible de la première entrée est raccordé au chiffre le plus faible de la seconde entrée du premier commutateur (u1) et l'entrée de commande de ce commutateur est raccordée à la sortie de report du premier additionneur (a1) ;
   - un second circuit de retardement (v2) est branché en aval du premier commutateur (u1) ;
   - les p-2 chiffres les plus faibles du signal de sortie du premier circuit de retardement (v1) sont envoyés à un troisième circuit de retardement (v3) ;

- la première entrée d'un second additionneur (a2) est raccordée à la sortie du second circuit de retardement (v2) ;
- les p chiffres les plus élevés du signal de sortie du second circuit de retardement (v2) sont ajoutés aux p positions les plus élevées de la première entrée d'un second commutateur (u2), et la sortie somme du second additionneur (a2) est raccordée aux p positions les plus élevées de la seconde entrée du second commutateur (u2) et l'entrée de commande de ce dernier est raccordée à la sortie de report du second additionneur (a2), le chiffre respectivement le plus faible des deux entrées du second commutateur (u2) étant raccordé au chiffre le plus élevé de la sortie du troisième circuit de retardement (v3) ;
- un quatrième circuit de retardement (v4) est branché en aval du second commutateur (u2) ;
- les p-3 chiffres les plus faibles du signal de sortie du troisième circuit de retardement (v3) sont envoyés à un cinquième circuit de retardement (v5), et ainsi de suite ;
- la première entrée d'un (p-1)-ème additionneur (ap-1) est raccordée à la sortie d'un (2p-4)-ème circuit de retardement :
- les p chiffres les plus faibles du signal de sortie du (2p-4)-ème circuit de retardement sont envoyées aux p positions les plus élevées de la première entrée d'un (p-1)-ème commutateur (up-1), et la sortie somme du (p-1)-ème additionneur (ap-1) est raccordée aux p positions les plus élevées de la seconde entrée du (p-1)-ème commutateur (up-1) et l'entrée de commande de ce dernier est raccordée à la sortie de report du (p-1)-ème additionneur (ap-1), la position respectivement la plus faible des deux entrées du (p-1)-ème commutateur (up-1) étant raccordée à la sortie d'un (2p-3)-ème circuit de retardement ;
- un (2p-2)-ème circuit de retardement (v2p-2) est branché en aval du (p-1)-ème commutateur (up-1) ;
- la première entrée d'un p-ème additionneur (ap) est raccordée à la sortie du (2p-2)-ème circuit de retardement (v2p-2) ;
- les p chiffres les plus faibles du signal de sortie du (2p-1)-ième circuit de retardement (v2p-1) sont envoyés à la première entrée d'un p-ème commutateur (up) à p positions, et la sortie somme du p-ème additionneur (ap) est raccordée à la seconde entrée du p-ème commutateur (up) et l'entrée de commande de ce dernier est raccordée à la sortie de report du pème additionneur (ap) ;
- un (2p-1)-ème circuit de retardement (v2p-1), dont le signal de sortie constitue le second signal numérique (s2), est branché en aval du p-ème commutateur (up) ;
- le mot binaire ("-n"), qui correspond à la valeur négative de n, est envoyé à la seconde entrée respective des p additionneurs (a1...ap), qui comportent tous $(p+1)$ positions, et la sortie somme respective est raccordée, sans le chiffre de signe respectif, à la seconde entrée du commutateur respectif ;
- les p-1 premiers commutateurs (u1...up-1) comportent respectivement $(p+1)$ positions ;
- la sortie de report respective des p additionneurs (a1...ap) est raccordée par l'intermédiaire respectivement de l'un de p inverseurs (i1...ip) à l'entrée série respective de l'un de p registres à décalage (sr1...srp) à p étages, dont le signal de décalage est le signal de cadence (t) ; et
- les différents chiffres du premier signal numérique (s1) peuvent être obtenus de la manière indiquée ci-après au niveau respectivement d'un étage d'un registre à décalage (sr...) :
  - le chiffre possédant la valeur $2^{p-1}$ peut être prélevé sur le p-ème étage (p) du premier registre à décalage (sr1) ;
  - le chiffre possédant la valeur $2^{p-2}$ peut être prélevé sur le (p-1)-ème du second registre à décalage (sr2), etc. ; et
  - le chiffre possédant la valeur $2^0$ peut être prélevé sur le premier étage (1) du p-ème registre à décalage (srp).